# EUROPÄISCHE PATENTSCHRIFT

(11) **EP 2 738 317 B1**
(45) Veröffentlichungstag und Bekanntmachung des Hinweises auf die Patenterteilung: **14.09.2016**
(21) Anmeldenummer: 14150054.6
(22) Anmeldetag: 26.02.2011
(51) Int. Cl.: E04B 2/74, E04C 2/38, E04B 1/61, E04F 19/06, E04B 2/78

(54) **Wandbauplattenelement**
Wall construction panel element
Élément de panneau mural

(30) Priorität: 07.05.2010 DE 202010006529 U
(43) Veröffentlichungstag der Anmeldung: 04.06.2014
(62) Teilanmeldung aus: 11001599.7
(73) Patentinhaber: Hestex Systems B.V., 7332 BE Apeldoorn (NL)
(72) Erfinder: Nicolaas, Arie Sint, 7301 BC Apeldoorn (NL)
(74) Vertreter: Stenger Watzke Ring

(56) Entgegenhaltungen:
- EP-A2- 0 322 403
- DE-A1- 2 948 971
- DE-A1- 3 820 246
- DE-U1-202005 003 268
- FR-A1- 2 729 985
- GB-A- 1 436 412
- US-A- 6 141 926

## Beschreibung

Die vorliegende Erfindung betrifft ein Wandbauplattenelement.

Aus der DE 29 48 971 A1 sind als Wandbauplatten nach dem Oberbegriff des Anspruchs 1 dienende Flächenkonstruktionselemente bekannt, welche zum Aufbau mittels einer Verbindungsvorrichtung verbunden werden und durch eine Verdrehbewegung gegenüber einem Pfosten in diesen eingeführt werden können. Das Resultat ist eine schwenkbeweglich an einem Pfosten angeordnete Wandbauplatte, welche beispielsweise als Doppeltür oder abschließbares Schaufenster verwendet werden kann. Gemäß der Lehre der DE 29 48 971 A1 soll ein Flächenkonstruktionselement nur durch zwei der dort vorgeschlagenen Verbindungsvorrichtungen seitlich gehalten werden. Auf die (alternative) Verwendung von horizontalen Zargen soll ganz bewusst verzichtet werden.

Aus der GB 1 436 412 ist ein System für die stationäre Errichtung von Trockenbauwänden bekannt. Wandbauplatten werden mit Hilfe von Anschlussstücken gegenüber Pfostenelementen zu verklemmen. Das Anschlussstück weist zu diesem Zweck eine Nase auf, welche in einen im Pfosten gebildeten Einschubkanal eingeführt werden kann. Die Anschlussstücke erstrecken sich nur über einen Bruchteil der Kantenlänge der Wandbauplatten.

Systeme für den mobilen Aufbau von Wänden sind insbesondere für den Bereich Messebau bekannt, Stand der Technik und umfangreichem Einsatz. Solche Systeme für Regelsysteme, Messeaufbauten und dergleichen verwenden üblicherweise Klemmverbindersysteme. Zwischen Rahmenteilen wie Pfosten, Regalbrettern und ähnlichen Verbindungsstrukturen werden lösbare Verbinder eingesetzt. So lässt sich eine Schnellverbindetechnik realisieren, so dass ein belastbarer Aufbau erreicht werden kann. Um eine hohe Mobilität erreichen zu können, sind ein schneller Auf- und Abbau angestrebt. Beispielsweise wird ein gattungsgemäßes System in der EP 1 234 985 B1 offenbart, dort Klemmverbindersystem genannt. Eine Ankereinheit der Verbindungsvorrichtung ist klauenförmig ausgebildet. Sie weist bewegbare Ankerelemente auf, die mit Streben eines Gegenelementes wie einem Pfosten oder dergleichen verbindbar sind. Hierzu werden die Ankerelemente in eine Öffnung des Pfostens eingeführt. Das Festlegen erfolgt dadurch, dass an den Enden der Ankerelemente ausgebildete Klauen den Rand einer Nut oder Öffnung hintergreifen und auf diese Weise die Verbindungsvorrichtung am Pfosten festlegen. Der Antrieb besteht aus einem Getriebe, meistens exzenterbetätigt.

Vergleichbare Systeme sind gezeigt und beschrieben in der WO 2009/000390 A1 und dergleichen. Es lassen sich mit derartigen Verbindern unter zugehörigen Profilsystemen, beispielsweise auch beschrieben in EP 0 412 339 A2, beispielsweise Messestände kreieren.

Im Stand der Technik ist es bekannt, dass aus Pfosten und Riegeln, meistens gebildet aus völlig gleichartigen Strangelementen mit Hohlprofilbereichen und hinterschnittenen Nutbereichen, Wände aufgebaut werden. Dies erfolgt dadurch, dass beispielsweise ein Pfosten in seinen Endbereichen mit den Stirnkanten eines Riegels über entsprechende Klemmverbinder verbunden wird. Auf diese Weise entsteht eine Art Rahmen, der offene hinterschnittene Nuten an der Innenwandung zeigt. In diese Nuten lässt sich ohne weiteres ein Ausfachelement, beispielsweise eine Pressspanplatte, eine Glasplatte oder dergleichen einschieben. Es verbleibt jedoch mindestens eine freie Kante, auf die dann beispielsweise wiederum ein Pfosten bzw. ein Riegel aufgesetzt werden muss, der dann mit den angrenzenden Pfosten-/Riegelelementen verbunden werden muss.

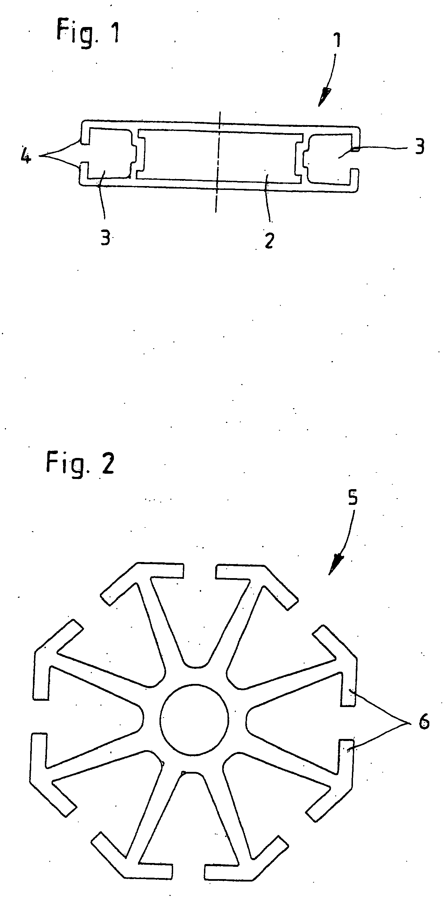

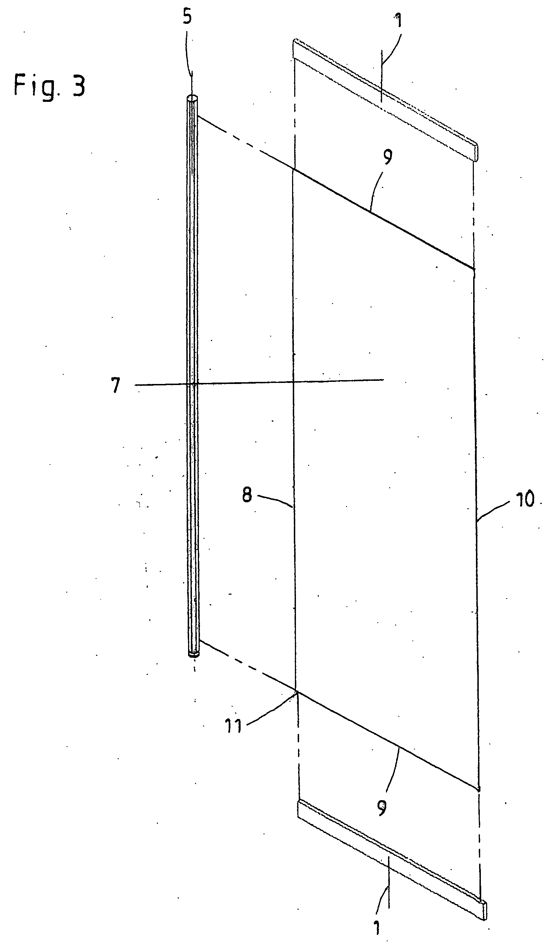

Als Beispiel für entsprechende Strangprofile sind die Figuren 1 und 2 beigelegt. Eine Zusammenbaumöglichkeit ergibt sich aus der Figur 3. Die Figuren 1 bis 3 zeigen alle den Stand der Technik.

Fig. 1 zeigt den Querschnitt eines Rechteckprofils 1, welches in der Mitte eine rechteckige Hohlkammer 2 und an beiden Seiten davon Nutebereiche 3 aufweist. Die Nuten 3 sind teilgeschlossen, und zwar durch die Schenkel 4, so dass sich eine hinterschnittene Nut ergibt, hinter die die pilzartigen Köpfe von Klemmverbindern eingreifen können. Dabei gibt es entweder sogenannte Hammerkopfverbinder, die in eine Einsetzposition in die Nut 3 eingeschoben und dann durch querdrehen hinter die Schenkel 4 gebracht werden, und es gibt sogenannte Klemmverbinder, bei welchen zwei Federelemente die Schenkel 4 hintergreifend in die Nut 3 eingesetzt sind. In beiden Fällen werden die Elemente beispielsweise durch Drehen eines Exzenters angezogen. Dabei bewegen sie sich relativ zu einem nicht gezeigten Körper, der wiederum in einer Hohlkammer 2 eines Profils eingesetzt und dort befestigt ist. Auf diese Weise kann also ein Profil 1 mit seiner Stirnkante an ein gleichartiges Profil 1 angesetzt und mit diesem dauerhaft aber lösbar verbunden werden.

Ein alternatives Profil ist in dem Querschnitt in Fig. 2 gezeigt, wobei es sich um einen achteckigen Pfosten handelt, bei welchem eine Vielzahl von Nuten gebildet sind, deren hinterschnittene Schenkel mit 6 bezeichnet sind. Derartige Achteckprofile können beispielsweise als Pfosten eingesetzt werden.

Fig. 3, ebenfalls Stand der Technik, zeigt eine herkömmliche Wand. Ein Wandelement 7, beispielsweise eine Pressspanplatte, eine Glasscheibe, eine Hartfaserplatte oder dergleichen, die lackiert oder sonst wie dekoriert sein kann, ist mit einer Längskante 8 in die Nut eines Profils 5 eingesetzt. Die beiden daran angrenzenden Seitenkanten 9 sind in die Nuten 3 jeweils eines Profils 1 eingesetzt. In die Hohlkammern 2 der Profile 1 sind Klemmverbinder eingesetzt, die dann die Nut 6 des Profils 5 hintergreifend mit diesen verbunden werden. Wie die Verbindungsstelle 11 zeigt, sind dabei die Profile 1 praktisch so lang wie die Seitenkanten 9, während das Profil 5 um eine Länge gegenüber der Kante 8 verlängert ist, so dass die Verbinder 1 mit dem Profil 5 verbunden werden können. Es ist offensichtlich, dass die Kante 10 freisteht. Diese würde nunmehr dem Anschluss an die nächste Wand dienen können oder zwischen die Profile 1 könnte ein weiteres Kantenprofil 1 entlang der Kante 10 langgesetzt werden, beispielsweise ebenfalls das Pfostenelement der benachbarten Wand.

Es versteht sich von selbst, dass anstelle des Profils 5 an dieser Stelle auch ein weiteres Profil 1 als Pfosten eingesetzt und mit den Riegeln 1 an den Querkanten 9 verbunden werden kann. Dieser aus dem Stand der Technik bekannten Wände werden vor Ort montiert.

Vom Ablauf her werden also die erforderlichen Pfostenelemente und Riegelelemente vorgefertigt. Die notwendige Anzahl von Verbindern wird bereitgelegt und die notwendige Anzahl von Wandbauplatten wird bereitgelegt. Alle diese Elemente werden separat transportiert. Vor Ort wird dann Wand für Wand aufgebaut. Es zeigt sich, dass damit sehr viel Arbeit vor Ort aufgewandt werden muss. Darüber hinaus sind die Kanten der Wandelemente gefährdet. Das ständige Aufbauen und natürlich nach Abschluss einer Messe beispielsweise erforderliche Wiederabbauen und Transportieren in Einzelteilen ist weder für die Profilelemente noch die Verbinder noch für die Wandbauplatten vorteilhaft. Die Elemente unterliegen einem erheblichen Verschleiß und sind erheblichen Beschädigungsgefahren ausgesetzt.

Aus der US 6,141,926 A ist ein Paneelsystem für freistehende Paneele bekannt, bei welchen leichtgewichtige Wandbauplatten durch Nutpröfile eingerahmt werden. An diesen Notprofilen werden Stützen befestigt. Mehrere Paneele werden durch zusätzliche Verbindungsleisten verbunden. Ein aneinander Ansetzen von gleichartigen Platten durch sich verbindende Profile ist nicht vorgesehen. Die Paneele sind einzelne Stellwände.

Ausgehend vom vorbeschriebenen Stand der Technik liegt der Erfindung die Aufgabe zugrunde, ein Wandbauplattenelement zu verbessern, insbesondere dahingehend, dass ein größerer Grad an Vorfertigungsmöglichkeiten gegeben ist und eine Beschädigung der einzelnen Elemente sowie ein häufiges Zerlegen und Zusammenbauen vermieden werden.

Die technische Lösung dieser Aufgabe ergibt sich durch ein Wandbauplattenelement gemäß Anspruch 1. Weitere Vorteile und Merkmale ergeben sich jeweils aus den Unteransprüchen.

Mit der Erfindung wird vorgeschlagen, bei einem Wandbauplattenelement für den mobilen Aufbau von Wänden ein Kantenprofilelement einzusetzen, welches einerseits eine Nut aufweist, die zur Aufnahme der einer freien Kante eines Plattenelementes dient. Dem gegenüberliegend wird ein Federelement ausgebildet. Dieses Federelement kann Nuten entsprechender Pfosten- oder Riegel-Profile eingesetzt werden. Darüber hinaus hat das Kantenprofilelement einen Bereich zur Verbindung mit einem weiteren Profilelement.

Gemäß einem vorteilhaften Vorschlag der Erfindung ist der Verbindungsbereich durch ein Hohlprofil gebildet, in welches ein Verbinder, beispielsweise ein Klemmverbinder einsetzbar ist. Dieser kann dann in entsprechend beschriebener Weise mit einem Pfosten- oder Riegel-Element verbunden werden, in dem ein pilzartiger Kopf in eine hinterschnittene Nut eingreift.

Das erfindungsgemäße Kantenprofilelement ermöglicht es, zunächst einmal einen vollständigen Rahmen aus Profilelementen zu bilden, also Pfosten-, Riegelelemente und das Kantenprofilelement stellen die vier Kanten eines geschlossenen Rechtecks dar. Zum inneren weisen umlaufend vier Nuten von den Pfosten- und Riegelelementen sowie den Kantenprofilelement. Diese Nuten dienen der Aufnahme einer Wandbauplatte. Da die Elemente, also die Pfosten-, Riegel- und Kantenprofilelemente miteinander verbindbar sind, entsteht auf diese Weise ein vorgefertigtes Wandbauplattenelement. Ein derartiges vorgefertigtes Wandbauplattenelement kann in seiner Gesamtheit transportiert werden, so dass die Wandbauplatte im Kantenbereich nicht mehr Beschädigungen unterliegt. Weiterhin kann das einmal gefertigte Wandbauplattenelement immer wiederverwendet werden, ohne dass es ständig zusammengebaut und zerlegt werden muss. Darüber hinaus können gleiche Wandbauplattenelemente vor Ort auf einfachste Weise miteinander verbunden werden. Dabei können die Riegelelemente des einen Wandbauplattenelementes mit ihren freien Stirnkanten mittels entsprechender Klemmverbinder mit dem Pfostenelement des nächsten Wandbauplattenelementes verbunden werden. Da das Kantenprofilelement eine Feder aufweist, setzt sich diese automatisch in die Nut des Pfostenelementes ein. Auf diese Weise können sehr schnell vorgefertigte Wandbauplattenelemente zu einer ganzen Wand zusammengebaut werden. Sogar ein Übereinanderbau ist ohne weiteres möglich. Im Eckbereich können dann unter Verwendung entsprechender Eckprofile oder Mehrfachprofile - wie beispielsweise das in Fig. 2 gezeigte - schnell Wandbauplattenelemente über die Ecke gebaut werden. Auf diese Weise lassen sich sehr leicht und sehr schnell Räume erzeugen.

Mittels des Kantenprofilelementes lassen sich neue und erfindungsgemäße Wandbauplattenelemente herstellen, die in ihrer Gesamtheit zu einem System für den Wandaufbau verwendbar sind. Die besonderen Vorteile ergeben sich aus der Möglichkeit der vollständigen Vorfertigung von Wandbauplattenelementen und der Vermeidung von wiederholter Montage und Demontage sowie der Vermeidung von Beschädigungen der einzelnen Elemente. Neben dem Materialvorteil ergeben sich insbesondere erhebliche Zeitvorteile, denn ein Messeaufbau kann praktisch vollständig vorgefertigt werden und braucht vor Ort nur noch zusammengestellt werden.

Weitere Vorteile und Merkmale ergeben sich aus der folgenden Beschreibung anhand der Figuren. Dabei zeigen:
- Fig. 1: eine Schnittdarstellung durch ein Hohlprofilelement (Stand der Technik);
- Fig. 2: eine Schnittdarstellung durch ein weiteres Profilelement (Stand der Technik);
- Fig. 3: eine schematische Darstellung eines Wandbauelementes nach dem Stand der Technik;
- Fig. 4: eine Schnittdarstellung durch eine Ausführungsform eines Kantenprofilelementes;
- Fig. 5: eine schematische Darstellung eines Wandbauplattenelementes unter Verwendung des erfindungsgemäßen Kantenprofilelementes und
- Fig. 6: eine schematische Draufsicht auf ein erfindungsgemäßes Wandbauplattenelement.

Ein erfindungsgemäßes Kantenprofilelement 15 weist eine Nut 16 und gegenüberliegend eine Feder 17 auf. Die Nut 16 ist im gezeigten Ausführungsbeispiel in Längsrichtung mit Zähnen oder Klinken versehen. Auf diese Weise kann das Kantenprofilelement 15 auf die Seitenkante einer Wandbauplatte aufgesteckt werden. Im gezeigten Ausführungsbeispiel weist das Profil eine zwischen Nut 16 und Feder 17 liegende Hohlkammer 18 auf, die der Aufnahme eines Klemmverbinders dient. Der Klemmverbinder kann dann wiederum mit seinem pilzartigen Kopf in die Nut 3 eines Profils 1 eingesetzt werden, um mit diesem verbunden zu werden.

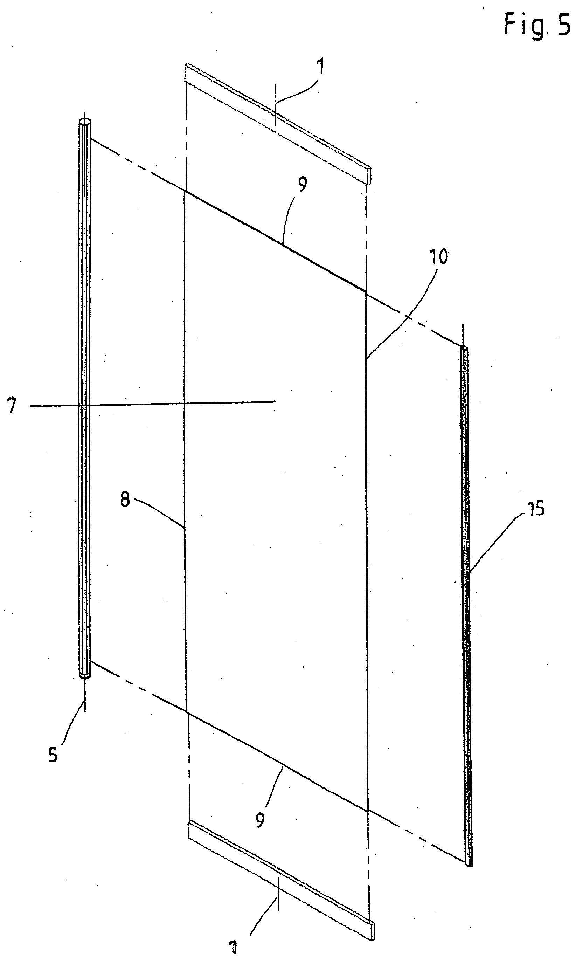

Fig. 5 zeigt ein Ausführungsbeispiel für den Aufbau eines Wandbauplattenelementes nach der Erfindung. Die Wandbauplatte 7 ist, wie bereits in Fig. 3 zum Stand der Technik beschrieben, mit einem Pfostenelement 5 und damit fest verbundenen Riegelelementen 1 aus Profilelementen verbunden, die die Seitenkanten 8 und 9 abdecken. Auf die Seitenkante 10 ist in erfindungsgemäßer Weise ein Kantenprofilelement 15 aufgesteckt und an den beiden Stirnkanten mit den Profilelementen 1 verbinden. Auf diese Weise entsteht ein vorgefertigtes, transportierbares Wandbauplattenelement. Mit einer Vielzahl solcher Wandbauplattenelemente können ohne weiteres ganze Räume in schnellster Montagezeit gefertigt werden. Da die Wandbauplattenelemente vorfertigbar sind, vergeht vergleichsweise wenig Zeit beim Aufbau. Darüber hinaus müssen die einzelnen Elemente nicht mehr demontiert werden, sondern können in ihrer Gesamtheit transportiert werden. Auf diese Weise werden weder die Wandbauplatten 7 im Flächen- und/oder insbesondere Kantenbereich beschädigt noch werden die Profilelemente durch falsche Handhabung beschädigt oder die Verbinder ermüden durch häufiges Öffnen und Schließen.

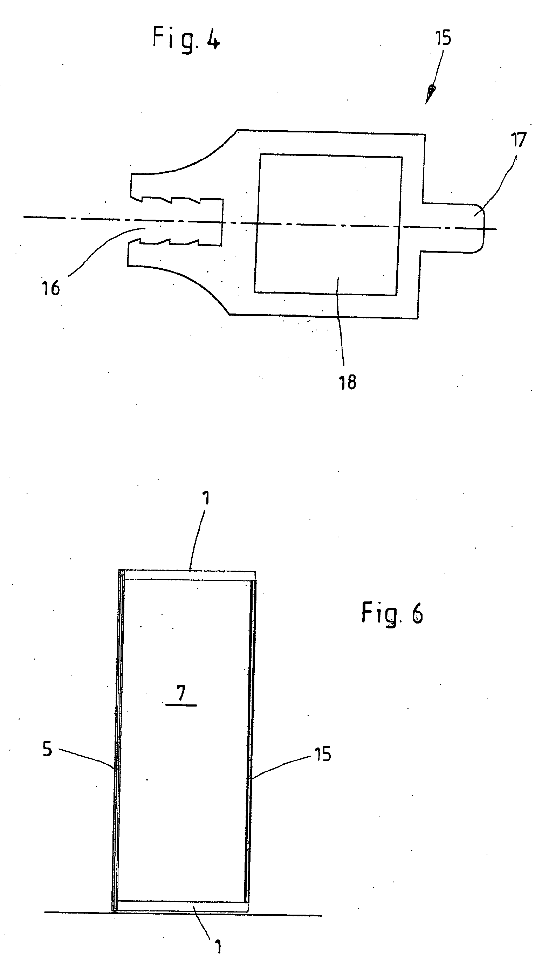

Es ergibt sich dann ein Wandbauplattenelement wie es im Zusammenbau in Fig. 6 gezeigt ist. Dieses kann dann ohne weiteres mit gleichartigen Wandbauplattenelementen verbunden werden. Dabei versteht es sich von selbst, dass anstelle des Pfostenelements 5 auch ein Element 1 eingesetzt werden kann, wenn es sich um ebene Wandbereiche handelt, so dass entsprechende Mehrfachnutelemente nur im Eckbereich eingesetzt werden müssen. Auch können natürlich Eckprofile eingesetzt werden und dergleichen.

Die beschriebenen Ausführungsbeispiele dienen nur der Erläuterung und sind nicht beschränkend.

### Bezugszeichenliste

- 1: Hohlprofil
- 2: Hohlkammer
- 3: Nut
- 4: Schenkel
- 5: Profil
- 6: Nutschenkel
- 7: Wandbauplatte
- 8: Seitenkanten
- 9: Seitenkanten
- 10: Seitenkanten
- 11: Eckbereich
- 15: Kantenprofilelement
- 16: Nut
- 17: Feder
- 18: Hohlkammer

## Patentansprüche

1. Wandbauplattenelement für den mobilen Aufbau von Wänden, bestehend aus einer flächigen Wandbauplatte (7), die an allen vier Kanten mit mittels Verbindern verbundenen Hohlprofilen (1, 5, 15) besetzt ist, welche Hohlprofile (1, 5, 15) die vier Kanten eines geschlossenen Rechtecks bilden, wobei ein Hohlprofil an einer der Kanten als Kantenprofilelement (15) ausgebildet ist, welches Kantenprofilelement (15) gebildet ist durch einen Profilstrang mit in Strangrichtung einerseits verlaufend einer Nut (16) zur Aufnahme einer Kante der Wandbauplatte (7) sowie an der der Nut (16) gegenüberliegenden Oberfläche einem Federprofil (17) zum Einsetzen in Nuten von Pfosten- oder Riegelprofilen (1, 5, 15), **dadurch gekennzeichnet, dass** zwischen der Nut (16) und dem Federprofil (17) ein als Hohlprofil (15) ausgelegter Befestigungsbereich (18) zur Verbindung mit einem der anderen Hohlprofile (1, 5, 15) ausgebildet ist, wobei das an der dem Kantenprofilelement (15) gegenüberliegenden Kante der Wandbauplatte (7) angeordnete Hohlprofil als Riegel- oder Pfostenprofil (1, 5) ausgebildet ist, welches Riegel- oder Pfostenprofil (1, 5) eine Nut zur Aufnahme des Federprofils eines weiteren Wandbauplattenelements aufweist, wobei in dem Befestigungsbereich (18) des Kantenprofilelements zur Verbindung mit anderen Profilelementen (5, 15) ein Verbinder eingesetzt ist, der als Klemmverbinder mit einem eine Nut (3) eines angesetzten Profilelementes (5, 15) hintergreifenden Kopf ausgebildet ist.

2. Wandbauplattenelement nach Anspruch 1, **dadurch gekennzeichnet, dass** die das geschlossene Rechteck bildenden Hohlprofile (1, 5, 15) nach innen weisend und umlaufend vier Nuten (3, 16) zur Aufnahme der Wandbauplatte (7) aufweisen.

3. Wandbauplattenelement nach einem der vorhergehenden Ansprüche, **dadurch gekennzeichnet, dass** das Kantenprofilelement (15) auf die Kante (9, 10) aufgeklemmt ist.

4. Wandbauplattenelement nach einem der vorhergehenden Ansprüche, **dadurch gekennzeichnet, dass** das Kantenprofilelement (15) aus Aluminium gebildet ist.

5. Wandbauplattenelement nach einem der vorhergehenden Ansprüche, **dadurch gekennzeichnet, dass** die Nutseitenwände des Kantenprofilelements (15) an der Innenseite geraut ausgebildet sind.

6. Wandbauplattenelement nach Anspruch 5, **dadurch gekennzeichnet, dass** die Rauheit durch in Strangrichtung längs verlaufende Klinken ausgebildet ist.

7. Wandbausystem mit einer Vielzahl von Wandbauplattenelementen nach einem der vorangehenden Ansprüche, wobei das Federprofil eines ersten Wandbauplattenelements in eine Nut eines Pfosten- oder Riegelprofils eines zweiten Wandbauplattenelements eingesetzt ist.

8. Wandbausystem nach Anspruch 7, wobei ein erstes Wandbauplattenelement an der dem Kantenprofilelement gegenüberliegenden Kante der Wandbauplatte ein Riegelprofil aufweist und ein zweites Wandbauplattenelement an der dem Kantenprofilelement gegenüberliegenden Kante der Wandbauplatte ein Pfostenprofil aufweist.

## Claims

1. Wall construction panel element for the mobile construction of walls, consisting of a flat wall construction panel (7) equipped on all four edges thereof with hollow profiles (1, 5, 15) connected by means of connectors, said hollow profiles (1, 5, 15) constituting the four edges of a closed rectangle, wherein one hollow profile is formed as an edge profile element (15) on one edge, which edge profile element (15) is formed by a profiled bead having a groove (16) extending in the bead direction on one side, for receiving an edge of the wall construction panel (7), and having a tongue profile (17) on the surface facing said groove (16), for insertion in grooves of post or cross-beam profiles (1, 5, 15), **characterized in that** between said groove (16) and said tongue profile (17) a fixing region (18) is formed which is constructed as a hollow profile (15) for connection to one of the other hollow profiles (1, 5, 15), wherein said hollow profile arranged on the edge of the wall construction panel (7) facing said edge profile element (15) is constructed as a post or cross-beam profile (1, 5), which post or cross-beam profile (1, 5) includes a groove for receiving the tongue profile of a further wall construction panel element, wherein in said fixing region (18) of the edge profile element a connector for connection to other profile elements (5, 15) is inserted, which connector is designed as a clamping connector having a head that engages behind a groove (3) of a profile element (5, 15) which is attached.

2. Wall construction panel element according to claim 1, **characterized in that** the hollow profiles (1, 5, 15) forming said closed rectangle present four peripheral and inwardly facing grooves (3, 16) for receiving said wall construction panel (7).

3. Wall construction panel element according to one of the preceding claims, **characterized in that** said edge profile element (15) is clamped onto the edge (9, 10).

4. Wall construction panel element according to one of the preceding claims, **characterized in that** said edge profile element (15) is formed of aluminum.

5. Wall construction panel element according to one of the preceding claims, **characterized in that** the groove lateral walls of said edge profile element (15) are roughened on the inner side.

6. Wall construction panel element according to claim 5, **characterized in that** said roughness is created by detents longitudinally extending in the bead direction.

7. Wall construction system comprising a plurality of wall construction panel elements according to one of the preceding claims, wherein the tongue profile of a first wall construction panel element is inserted in a groove of a post or cross-beam profile of a second wall construction panel element.

8. Wall construction system according to claim 7, wherein a first wall construction panel element has a cross-beam profile on the edge of the wall construction panel facing the edge profile element, and a second wall construction panel element has a cross-beam profile on the edge of the wall construction panel facing the edge profile element.

## Revendications

1. Élément de panneau mural pour la construction mobile des parois, ledit élément constitué d'un panneau mural plat (7) muni, sur ses quatre arêtes, des profilés creux (1, 5, 15) reliés au moyen des connecteurs, profilés creux (1, 5, 15) qui forment les quatre arêtes d'un rectangle fermé, l'un des profilés creux étant réalisé comme un élément de profilé d'arête (15) sur l'une des arêtes, ledit élément de profilé d'arête (15) étant formé par un cordon profilé comportant sur un côté une rainure (16) s'étendant en direction du cordon, pour recevoir une des arêtes de panneau mural (7) et comportant sur la surface opposée à ladite rainure (16) un profilé de languette (17) pour l'insertion dans des rainures de profilés de montant ou de traverse (1, 5, 15), **caractérisé en ce qu'**entre la rainure (16) et le profilé de languette (17) est formée une zone de fixation (18) réalisée comme un profilé creux (15) pour le raccordement à l'un des autres profilés creux (1, 5, 15), le profilé creux disposé sur l'arête du panneau mural (7) opposée à l'élément de profilé d'arête (15) étant réalisé comme un profilé de montant ou de traverse (1, 5), ledit profilé de montant ou de traverse (1,5) présentant une rainure pour la réception du profilé de languette d'un autre élément de panneau mural, avec un connecteur étant inséré dans la zone de fixation (18) de l'élément de profilé d'arête, pour le raccordement à d'autres éléments de profilé (5, 15), connecteur qui est réalisé comme un connecteur de cramponnement avec une tête qui vient en prise en arrière d'une rainure (3) d'un élément de profilé appliqué.

2. Élément de panneau mural selon la revendication 1, **caractérisé en ce que** les profilés creux (1, 5, 15) formant le rectangle fermé présentent quatre rainures (3, 16) périphériques tournées vers l'intérieur, pour la réception du panneau mural (7).

3. Élément de panneau mural selon l'une des revendications précédentes, **caractérisé en ce que** l'élément de profilé d'arête (15) est fixé sur l'arête (9, 10) par cramponnage.

4. Élément de panneau mural selon l'une des revendications précédentes, **caractérisé en ce que** l'élément de profilé d'arête (15) est réalisé en aluminium.

5. Élément de panneau mural selon l'une des revendications précédentes, **caractérisé en ce que** les parois latérales de la rainure de l'élément de profilé d'arête (15) sont rendues rugueuses sur la face intérieure.

6. Élément de panneau mural selon l'une des revendications précédentes, **caractérisé en ce que** la rugosité est réalisée par des cliquets s'étendant longitudinalement en direction de cordon.

7. Système de construction de paroi, comprenant une pluralité d'éléments de panneau mural selon l'une quelconque des revendications précédentes, dans lequel le profilé de languette d'un premier élément de panneau mural est inséré dans une rainure d'un profilé de montant ou de traverse d'un deuxième élément de panneau mural.

8. Système selon la revendication 7, dans lequel un premier élément de panneau mural présente sur l'arête du panneau mural opposée à l'élément de profilé d'arête un profilé de traverse, et dans lequel un deuxième élément de panneau mural présente sur l'arête du panneau mural opposé à l'élément de profilé d'arête un profilé de montant.
